# EUROPEAN PATENT SPECIFICATION

(11) **EP 2 582 739 B1**
(45) Date of publication and mention of the grant of the patent: **27.02.2019**
(21) Application number: 11722377.6
(22) Date of filing: 19.05.2011
(51) Int. Cl.: C08G 18/12, C08G 18/66, C08G 18/76, C08G 18/48

(54) **OIL-RESISTANT POLYURETHANE SHOE SOLES MADE USING ALL-PROPYLENE OXIDE POLYOLS**
ÖLBESTÄNDIGE POLYURETHANSCHUHSOHLEN AUS POLYOLEN AUS 100% POLYPROPYLENOXID
SEMELLES DE CHAUSSURES EN POLYURÉTHANE RÉSISTANT AUX HUILES FABRIQUÉES EN UTILISANT DES POLYOLS ENTIÈREMENT À BASE D'OXYDE DE PROPYLÈNE

(30) Priority: 16.06.2010 IT MI20101084
(43) Date of publication of application: 24.04.2013
(73) Proprietor: Dow Global Technologies LLC, Midland, MI 48674 (US)
(72) Inventor: CORINTI, Elisa, I-42015 Correggio (RE) (IT); ZANACCHI, Luciano, I-26030 Solarolo Rainerio (CR) (IT); BENVENUTI, Andrea, I-42015 Correggio (RE) (IT)
(74) Representative: Beck Greener
(86) International application number: PCT/EP2011/058212
(87) International publication number: WO 2011/157510

(56) References cited:
- WO-A1-2009/047149
- WO-A2-2004/067607
- US-A1- 2002 013 377
- US-A1- 2007 129 455
- US-B1- 6 291 538

## Description

This invention pertains to polyurethane shoe soles and methods for making them.

Shoe soles are very often made from a molded polyurethane elastomer. The polyurethane elastomers can be broadly classified into two types: those based on polyether polyols and those based on polyester polyols.

One advantage of the polyester polyol-based shoe soles is that they are more resistant to oils. This is an important performance attribute for the soles of protective footwear, such as safety shoes. Safety shoes are often worn in industrial and other work environments in which they are frequently exposed to organic materials such as solvents, greases, petroleum products, vegetable oils, animal fats or derivatives thereof. Inadequate oil resistance can cause the shoe to fail. Therefore, polyurethane shoe sole materials are often subjected to oil resistance testing. A prevalent test protocol is the ISO 20344-ISO 20345 method described in section 8.2 of ISO 1817 (1999). This method is an immersion test in which a test sample is immersed in isooctane (2,2,4-trimethylpentane) and the change in volume is determined. The increase in volume of the sample as a result of being immersed in the fluid is an indication of how oil-resistant the material is. Materials that do not swell or only swell slightly on this test are more oil-resistant. A target for safety shoe sole materials is a volume increase of no greater than 12% on this test; a preferred target is a 10% or smaller volume increase.

Although polyether-based polyurethane elastomers have not been able to provide the necessary oil resistance for safety shoe applications, they nonetheless have other useful properties and are widely available at low cost. It would be desirable to provide a polyether-based polyurethane shoe sole that can pass the ISO 1817 immersion test and thus find application as safety shoe soles. It would further be desirable to accomplish this without compromising other desirable properties of polyether polyol-based polyurethane systems. In particular, for easy processing, it would be preferred that the polyether polyol-based polyurethane elastomer be processable in a two-shot polymerization process with a commercially reasonable demolding time. Conventionally, this requires that the polyether polyols in the "B-side" or polyol side of the formulation be ethylene oxide-capped, in order to provide the necessary reactivity to the system.

Polyether polyol-based polyurethanes for most elastomer applications, including shoe soles, are usually made using poly(propylene oxide) homopolymers or certain copolymers of propylene oxide with ethylene oxide. The copolymers are usually poly(propylene oxide) polymers that are end-capped with ethylene oxide. Thus, in EP 900 246, there is described a polyether polyol-based polyurethane shoe sole formulation which is made in a one-shot process from an isocyanate-terminated quasi-prepolymer and a polyol component. The quasi-prepolymer is made using a 4000 molecular weight poly(propylene oxide) homopolymer, but the polyols in the polyol component are all ethylene oxide-capped poly(propylene oxide)s, as is typical in one-shot manufacturing methods.

US 5728745, in examples 1 and 2, describes a polyurethane elastomer made using a mixture of a 1000 molecular weight poly(propylene oxide) homopolymer and a 4000 molecular weight poly(propylene oxide) homopolymer. However, those examples are two-shot processes, in which all the high equivalent weight polyols are incorporated into an isocyanate-terminated prepolymer that is then converted to the elastomer by reaction with a chain extender. US 5728745 reports that when a one-shot process is used, the polyols should be ethylene oxide-capped in order to improve the reactivity of the system.

EP 1 282 658 describes an integral skin, semi rigid foam made in a one-shot system, using exclusively poly(propylene oxide) homopolymers.

This invention is a process for preparing a polyurethane elastomer, comprising mixing a polyol component and a polyisocyanate component to form a polyurethane composition and curing the polyurethane composition in a closed mold, wherein:
a) the polyol component comprises at least one chain extender and a mixture of polyols that have molecular weights of 400 or more that includes at least one propylene oxide homopolymer diol and at least one ethylene oxide-terminated polypropylene oxide diol or triol, wherein the polypropylene oxide homopolymer diol constitutes from 10 to 50% by weight of the polyols that have molecular weights of 400 or more; and
b) a polyisocyanate component comprising an isocyanate-terminated prepolymer having an isocyanate content of from 10 to 20% by weight, the isocyanate-terminated prepolymer being a reaction product of diphenylmethanediisocyanate (MDI) or an MDI derivative and an all-propylene oxide polyol having a molecular weight of at least 400.

The invention is also a polyurethane elastomer made in accordance with the foregoing process.

A polyurethane made in accordance with invention surprisingly has excellent resistance to many organic materials, and in particular various types of oils. The reason for this effect is not understood. It cannot be accounted for easily by changes in the relative proportions of ethylene oxide and propylene oxide units in the elastomer, as these differences are too small to account for the very substantial improvement in oil resistance that is seen with this invention.

In the process of this invention, there is formed an isocyanate-terminated quasi-prepolymer, which is then reacted in a closed mold with a polyol component.

The quasi-prepolymer is a reaction product of diphenylmethanediisocyanate (MDI) or a derivative thereof. The MDI may be the 2,2'-, 2,4'- or 4,4'-isomer. The 4,4'- isomer, or mixtures of the 4,4'- and 2,4'- isomer, are preferred.

"Derivatives" of MDI are MDI that has been modified to include urethane, urea, biuret, carbodiimide, uretonimine or like linkages, and which has an isocyanate content of at least 28% by weight. These products are typically a mixture of unreacted MDI and molecules having linkages as just described. They typically have an isocyanate functionality of from 2.0 to 2.3 isocyanate groups per molecule.

The quasi-prepolymer is prepared by reacting MDI or the MDI derivative with a poly(propylene oxide) homopolymer that has a molecular weight of at least 400, preferably at least 800. The poly(propylene oxide) homopolymer may have a molecular weight as high as about 6000. A preferred molecular weight is up to 4000 and a more preferred molecular weight is up to 2000. The poly(propylene oxide) homopolymer used in making the quasi-prepolymer preferably has an average of from 1.8 to 3.0, preferably from 1.8 to 2.5 and still more preferably about 1.9 to 2.2 hydroxyl groups per molecule.

A low (up to 300) molecular weight diol may be used to make the quasi-prepolymer, in addition to the foregoing ingredients. This low molecular weight diol preferably has a molecular weight of from 62 to 200. Examples of the low molecular weight diol include ethane diol, 1,2- or 1,3-propane diol, diethylene glycol, dipropylene glycol, triethylene glycol, tripropylene glycol, cyclohexanedimethanol, and the like. This material is usually used in small amounts, if at all. If used in making the quasi-prepolymer, from 1 up to 25 parts by weight thereof may be used per 100 parts by weight of the poly(propylene oxide) homopolymer.

More than two equivalents of MDI or MDI derivative are used per equivalent of the diol(s) used to make the prepolymer. The resulting product includes molecules formed by capping the diol(s) with the MDI or MDI derivative, as well as some quantity of unreacted MDI or MDI derivative. The quasi-prepolymer should have an isocyanate content of at least 10%, and preferably at least 12% by weight. The isocyanate content should not exceed 20% and preferably does not exceed 18% by weight. The quasi-prepolymer should contain an average of from about 1.9 to about 2.5, preferably from 1.9 to 2.3 and more preferably from 2.0 to 2.2 isocyanate groups per molecule.

The quasi-prepolymer is converted into an elastomer through reaction with a polyol component that contains at least one chain extender and a mixture of polyols that have a molecular weight of 400 or more. The mixture of polyols that have molecular weights of 400 or more includes at least one poly(propylene oxide) homopolymer diol and at least one ethylene oxide-terminated polypropylene oxide diol or triol. The polypropylene oxide homopolymer diol constitutes from 10 to 60% by weight of the polyols that have molecular weights of 400 or more in the polyol component.

The poly(propylene oxide) homopolymer diol may have a molecular weight of up to 4000, preferably up to 2000 and still more preferably up to 1800. The poly(propylene oxide) homopolymer diol preferably has a molecular weight of at least 800.

The ethylene oxide-terminated poly(propylene oxide) diol or triol may have a molecular weight of from 400 to 6000. If a diol, the molecular weight is preferably from 800 to 4000. If a triol, the molecular weight is preferably from 1200 to 6000. A mixture of both a diol and a triol can be used. The terminal ethylene oxide groups introduce primary hydroxyl groups; the diol or triol should contain at least 70%, preferably at least 80% primary hydroxyl groups, with the remainder of the hydroxyl groups being secondary hydroxyl groups. The terminal ethylene oxide groups may constitute from 5 to 25% of the total weight of the diol or triol.

The poly(propylene oxide) homopolymer diol present in the polyol component, plus the all-propylene oxide polyol used to make the quasi-prepolymer, should together constitute from 10 to 40%, preferably from 20 to 40% of the total weight of all reactive materials that form the elastomer.

The chain extender is a compound having exactly two hydroxyl or primary amino groups per molecule and a molecular weight of less than 400, preferably less than 250 and still more preferably less than 150. Hydroxyl-terminated chain extenders are preferred. Examples of suitable chain extenders include alkylene glycols such as ethylene glycol, 1,2-propane diol, 1,3-propane diol, 1,4-butane diol, neopentyl glycol, 1,6-hexanediol and the like; glycol ethers such as diethylene glycol, triethylene glycol, dipropylene glycol, tripropylene glycol and the like; cyclohexanedimethanol, and aromatic diamines such as phenylene diamine, toluene diamine, diphenyl methane diamine, diethyltoluene diamine, and the like. A mixture of chain extenders may be used.

The chain extender may constitute from 2 to 25%, preferably from 4 to 20%, of the combined weight of all isocyanate-reactive materials in the polyol component.

Other ingredients may be present when the elastomer is made. At least one catalyst for the reaction of the polyol(s) with the quasi-prepolymer will in most cases be present so that commercially reasonable demold times can be obtained. Suitable urethane-forming catalysts include those described by U.S. Pat. No. 4,390,645 and in WO 02/079340, both incorporated herein by reference. Representative catalysts include tertiary amine and phosphine compounds, chelates of various metals, acidic metal salts of strong acids; strong bases, alcoholates and phenolates of various metals,
salts of organic acids with a variety of metals, organometallic derivatives of tetravalent tin, trivalent and pentavalent As, Sb and Bi and metal carbonyls of iron and cobalt.

Tertiary amine catalysts are generally preferred, alone or in conjunction with an organotin catalyst. Among the tertiary amine catalysts are dimethylbenzylamine, 1,8-diaza (5,4,0)undecane-7, pentamethyldiethylenetriamine, dimethylcyclohexylamine, triethylene diamine, dimethyl ethyl amine, n-ethyl morpholine, N-alkyl dimethylamine compounds such as N-ethyl N,N-dimethyl amine and N-cetyl N,N-dimethylamine, N-alkyl morpholine compounds such as N-ethyl morpholine and N-coco morpholine, and the like.

The catalyst is used in catalytically sufficient amounts. For tertiary amine catalysts, a suitable amount of the catalysts is from about 0.25 to about 4 parts, especially from about 0.5 to about 3 parts, of tertiary amine catalyst(s) per 100 parts by weight of the polyol component. Metal-containing catalysts typically are used in amounts from 0.001 to 1 part per 100 parts by weight of the polyol component.

One or more surfactants may be present, especially when some blowing agent is incorporated into the formulation. A surfactant can help to stabilize the cells of the composition as gas evolves to form bubbles. A surfactant can also help to wet filler particles and in that way make it easier to incorporate them into the system. Examples of suitable surfactants include alkali metal and amine salts of fatty acids, such as sodium oleate, sodium stearate sodium ricinolates, diethanolamine oleate, diethanolamine stearate, diethanolamine ricinoleate, and the like: alkali metal and amine salts of sulfonic acids such as dodecylbenzenesulfonic acid and dinaphthylmethanedisulfonic acid; ricinoleic acid; siloxane-oxalkylene polymers or copolymers and other organopolysiloxanes; oxyethylated alkylphenols (such as Tergitol NP9 and Triton X100, from The Dow Chemical Company); oxyethylated fatty alcohols such as Tergitol 15-S-9, from The Dow Chemical Company; paraffin oils; castor oil; ricinoleic acid esters; turkey red oil; peanut oil; paraffins; fatty alcohols; dimethyl polysiloxanes and oligomeric acrylates with polyoxyalkylene and fluoroalkane side groups. These surfactants are generally used in amount of 0.01 to 1 parts by weight based on 100 parts by weight of the polyols. Organosilicone surfactants are generally preferred types.

A small amount of a blowing agent may be included, if it is desired to form a microcellular elastomer. Water is a preferred blowing agent, but other chemical and/or physical blowing agents can be used. Chemical blowing agents react under the conditions of the elastomer-forming step to produce a gas, which is typically carbon dioxide or nitrogen. Physical blowing agents volatilize under the conditions of the elastomer-forming step. The amount of blowing agent, if any, is suitably sufficient to provide the elastomer with a foam density of from 500 to 1200 g/cm³. Up to about 1 part of water may be used per 100 parts by weight of polyols in the polyol component.

Fillers, dyes and/or pigments may be included. Among these are calcium carbonate, titanium dioxide, iron oxide, chromium oxide, azo/diazo dyes, phthalocyanines, dioxazines, recycled rigid polyurethane foam and carbon black.

In addition to the foregoing ingredients, the polyurethane-forming composition may include various auxiliary components, such as fillers, colorants, odor masks, flame retardants, biocides, antioxidants, UV stabilizers, antistatic agents, viscosity modifiers, and the like.

Except for fillers, the foregoing additives are generally used in small amounts, such as from 0.01 percent to 3 percent each by weight of the total polyurethane formulation. Fillers may be used in quantities as high as 50% of the total weight of the polyurethane formulation.

The elastomer is formed by mixing the quasi-prepolymer and the polyol component together and then curing the mixture in a closed mold. The starting materials are generally mixed in ratios that produce an isocyanate index of at least 70 to about 130. A preferred isocyanate index is from 80 to 120, and a more preferred index is from 90 to 110. The isocyanate index is equal to 100 times the number of isocyanate-reactive groups in the polyol component (including any blowing agents) divided by the number of isocyanate groups provided by the quasi-prepolymer.

The molding conditions are not generally considered to be critical provided that the mixture cures adequately. The components or the mixture may be preheated before being introduced into the mold. The mold may be preheated. It is usually necessary to cure the mixture at elevated temperature; for that reason the filled mold is generally heated in an oven or other suitable apparatus. Mold temperatures may be from 40 to 60°C. Curing times can range from as little as one minute to 30 minutes or more. After curing at least to the extent that the resulting elastomer can be removed from the mold without permanent damage or permanent deformation, the part can be demolded. If necessary, the part can be post-cured at an elevated temperature to complete the cure.

The elastomer will of course take the shape of the internal cavity of the mold; therefore the mold is designed to produce a part having the desired external shape and dimensions. A wide range of elastomeric parts can be produced, including gaskets, bushings, wheels, belts, and the like. However, shoe soles are an application of particular interest. The shoe sole may be, for example, a midsole, an insole, and outsole, or an integrated sole that performs two or more of these functions.

An advantage of the invention is that the inventive elastomer has surprisingly good oil resistance. For purposes of this invention, oil resistance is determined by the ISO 20344-ISO20345 test described in Section 8.2 of ISO 1817 (1999). In that test, two cylindrical pieces, each 16±1 mm in diameter and 4±0.5 mm thickness are immersed for 22 hours in that isooctane (2,2,4-trimethylpentane) at 23±2 °C. The volume of the cylindrical pieces is measured before and after immersion. To pass this standard, the increase in volume of the pieces must be lower than 12%). The elastomer made in accordance with the invention often exhibits a volume change of no greater than 12%, and preferably no greater than 10% on that test.

In addition, for shoe sole applications, the elastomer should have an elongation to break of at least 400%; a tear strength of at least 6 N/mm; a tensile strength of at least 5 N/mm²; and a Shore A hardness of from 30 to 80, preferably from 30 to 65, all as measured according to DIN 53543. The elastomer should also pass at least 30,000 cycles on the flex fatigue test of according to DIN 53543. For shoe sole applications, the elastomer should have a density of from 500 to 1200 g/cm³.

Shoe soles made in accordance with the invention can be attached to an upper in any convenient manner such as sewing or through the use of adhesives. The upper may be fabricated from any suitable material, depending on the intended use and styling considerations. Therefore, the upper may be made of leather, plastic, various fabrics, various natural fibers, and the like. The toe or other areas of the shoe may be reinforced with a metal or other hard material for protective purposes.

The following examples are provided to illustrate the invention but are not intended to limit the scope thereof. All parts and percentages are by weight unless otherwise indicated.

### Example 1

An isocyanate-terminated quasi-prepolymer is made by combining 68 parts of 4,4'-MDI, 28 parts of a 1000 molecular weight poly(propylene oxide) diol, 3.992 parts of dipropylene glycol and 0.0008 parts of benzoyl chloride. This mixture is heated to 90°C under nitrogen until a constant isocyanate content of 18% is obtained.

A polyol component is prepared by blending 50.21 parts of a 4000 molecular weight, difunctional poly(propylene oxide) capped with 19-21% ethylene oxide; 6.5 parts of 1,4-butanediol, 1.5 of a liquid polybutadiene, 2 parts of a 33% solution of triethylene diamine in dipropylene glycol, 0.2 parts of an organosilicone surfactant, 0.25 parts of an organotin catalyst and 39.34 parts of a 1000 molecular weight poly(propylene oxide) homopolymer diol.

An elastomer is produced by processing the foregoing quasi-prepolymer and the polyol component through a low pressure mixing machine and into a closed mold. The isocyanate index is 101; the machine output is 50 g/sec; isocyanate and polyol temperatures are 35 °C and 30°C, respectively; the mold temperature is 50°C and the demold time is 4 minutes.

Tensile strength, tear strength and elongation, hardness (Shore A) and flex fatigue are measured according to DIN 53543. Oil resistance is measured according to the ISO 1817 procedure described above. Results are given in the table following Comparative Sample A.

### Example 2

Elastomer Example 2 is made and tested in the same general manner as described in Example 1, except for the composition of the quasi-prepolymer. The quasi-prepolymer in this case is prepared by from 62.96 parts of 4,4'-MDi, 37.032 parts of the 1000 molecular weight poly(propylene oxide) homopolymer and 0.008 parts of benzoyl chloride. These ingredients are mixed and heated at 90°C until a constant isocyanate content of 18% by weight is obtained. Results of the physical property and oil resistance testing are given in the table following Comparative Sample A.

### Comparative Sample A

An isocyanate-terminated quasi-prepolymer is made by combining 64.845 parts of 4,4'-MDI, 15.489 parts of a 4000 molecular weight poly(propylene oxide) diol capped with 19-21% ethylene oxide, 15.489 parts of a 6000 molecular weight trifunctional poly(propylene oxide) capped with 19-21% ethylene oxide, 4.097 parts of dipropylene glycol and 0.0008 parts of benzoyl chloride. This mixture is heated to 90°C under nitrogen until a constant isocyanate content of 18.4 is % by weight is obtained.

A polyol component is prepared by blending 65.297 parts of a 4000 molecular weight, difunctional poly(propylene oxide) capped with 19-21% ethylene oxide; 26.599 parts of a parts of a 6000 molecular weight trifunctional poly(propylene oxide) capped with 19-21% ethylene oxide, 6.9 parts of 1,4-butanediol, 0.2 parts of glycerine, 0.990 parts of a 33% solution of triethylene diamine in dipropylene glycol and 0.014 parts of an organotin catalyst

An elastomer (Comparative Sample A) is produced by reacting the foregoing quasi-prepolymer and the polyol component in a closed mold under the general conditions described in Example 1, except that the isocyanate index is 106.

Physical properties and oil resistance are measured as before, with results as are given in the following table.

**Table**

| Designation | Shore A Hardness | Oil Resistance, (% volume increase) | Tear strength, N/mm | Tensile strength, N/mm2 | Elongation, % | Flex fatigue (kilocycles) |
|---|---|---|---|---|---|---|
| 1 | 56 | 4 | 6.7 | 11.1 | 509 | 100 |
| 2 | 49 | 8 | 7.2 | 6.4 | 613 | 40 |
| A | 58 | 18 | 11.0 | 11.5 | 500 | >30 |

As can be seen from the data in the foregoing Table, significantly better oil resistance is seen with this invention, compared to Comparative Sample A.

## Claims

1. A process for preparing a polyurethane elastomer, comprising mixing a polyol component and a polyisocyanate component to form a polyurethane composition and curing the polyurethane composition in a closed mold, wherein:
a) the polyol component comprises at least one chain extender and a mixture of polyols that have molecular weights of 400 or more that includes at least one propylene oxide homopolymer diol and at least one ethylene oxide-terminated polypropylene oxide diol or triol, wherein the polypropylene oxide homopolymer diol constitutes from 10 to 50% by weight of the polyols that have molecular weights of 400 or more; and
b) a polyisocyanate component comprising an isocyanate-terminated prepolymer having an isocyanate content of from 10 to 20% by weight, the isocyanate-terminated prepolymer being a reaction product of diphenylmethanediisocyanate (MDI) or an MDI derivative and an all-propylene oxide polyol having a molecular weight of at least 400.

2. The process of claim 1, wherein the molecular weight of the polypropylene oxide homopolymer diol is from 800 to 1800.

3. The process of claim 1 or 2, wherein the isocyanate index is from 90 to 100.

4. The process of any preceding claim, wherein the polypropylene oxide homopolymer diol constitutes from 20 to 40% of the combined weight of the polyol component and the all-propylene oxide polyol.

5. A polyurethane elastomer made according to the process of any of claims 1-4.

6. The polyurethane elastomer of claim 5, which exhibits an increase in volume of no greater than 10% when immersed in isooctane in accordance with the ISO 20344-ISO 20345 method described in section 8.2 of ISO 1817 (1999).

7. The polyurethane elastomer of claim 5 or 6, which has a density of from 500 to 1200 g/cm³.

8. The polyurethane elastomer of claim 5, 6 or 7, which has a Shore A hardness of from 30 to 65.

9. The polyurethane elastomer of any of claims 5-8, which is a shoe sole.

10. Shoe comprising an upper and a shoe sole of claim 9.

## Patentansprüche

1. Ein Verfahren zum Zubereiten eines Polyurethanelastomers, beinhaltend das Mischen einer Polyolkomponente und einer Polyisocyanatkomponente, um eine Polyurethanzusammensetzung zu bilden, und Härten der Polyurethanzusammensetzung in einer geschlossenen Form, wobei:
a) die Polyolkomponente mindestens einen Kettenverlängerer und eine Mischung von Polyolen, die Molekulargewichte von 400 oder mehr aufweisen, die mindestens ein Propylenoxidhomopolymerdiol und mindestens ein ethylenoxidterminiertes Polypropylenoxiddiol oder -triol umfasst, beinhaltet, wobei das Polypropylenoxidhomopolymerdiol 10 bis 50 Gew.-% der Polyole, die Molekulargewichte von 400 oder mehr aufweisen, ausmacht; und
b) eine Polyisocyanatkomponente, die ein isocyanatterminiertes Präpolymer mit einem Isocyanatgehalt von 10 bis 20 Gew.-% beinhaltet, wobei das isocyanatterminierte Präpolymer ein Reaktionsprodukt von Diphenylmethandiisocyanat (MDI) oder einem MDI-Derivat und einem Vollpropylenoxidpolyol mit einem Molekulargewicht von mindestens 400 ist.

2. Verfahren gemäß Anspruch 1, wobei das Molekulargewicht des Polypropylenoxidhomopolymerdiols 800 bis 1800 beträgt.

3. Verfahren gemäß Anspruch 1 oder 2, wobei der Isocyanatindex 90 bis 100 beträgt.

4. Verfahren gemäß einem der vorhergehenden Ansprüche, wobei das Polypropylenoxidhomopolymerdiol 20 bis 40 % des kombinierten Gewichts der Polyolkomponente und des Vollpropylenoxidpolyols ausmacht.

5. Ein nach dem Verfahren gemäß einem der Ansprüche 1-4 hergestelltes Polyurethanelastomer.

6. Polyurethanelastomer gemäß Anspruch 5, das eine Volumenzunahme von nicht mehr als 10 % zeigt, wenn es nach dem in Abschnitt 8.2 von ISO 1817 (1999) beschriebenen Verfahren ISO 20344-ISO 20345 in Isooctan eingetaucht wird.

7. Polyurethanelastomer gemäß Anspruch 5 oder 6, das eine Dichte von 500 bis 1200 g/cm³ aufweist.

8. Polyurethanelastomer gemäß Anspruch 5, 6 oder 7, das eine Shore-A-Härte von 30 bis

9. Polyurethanelastomer gemäß einem der Ansprüche 5-8, das eine Schuhsohle ist.

10. Ein Schuh, der einen Schaft und eine Schuhsohle gemäß Anspruch 9 beinhaltet.

## Revendications

1. Un procédé pour la préparation d'un élastomère polyuréthane, comprenant le mélange d'un constituant polyol et d'un constituant polyisocyanate afin de former une composition de polyuréthane et le durcissement de la composition de polyuréthane dans un moule fermé, dans lequel :
a) le constituant polyol comprend au moins un allongeur de chaîne et un mélange de polyols qui ont des masses moléculaires de 400 ou plus qui inclut au moins un diol homopolymère d'oxyde de propylène et au moins un diol ou triol poly(oxyde de propylène) à terminaison oxyde d'éthylène, dans lequel le diol homopolymère poly(oxyde de propylène) représente de 10 à 50 % en poids des polyols qui ont des masses moléculaires de 400 ou plus ; et
b) un constituant polyisocyanate comprenant un prépolymère à terminaison isocyanate ayant une teneur en isocyanate allant de 10 à 20 % en poids, le prépolymère à terminaison isocyanate étant un produit de réaction du diisocyanate de diphénylméthane (MDI) ou d'un dérivé de MDI et d'un polyol entièrement à base d'oxyde de propylène ayant une masse moléculaire d'au moins 400.

2. Le procédé de la revendication 1, dans lequel la masse moléculaire du diol homopolymère poly(oxyde de propylène) va de 800 à 1 800.

3. Le procédé de la revendication 1 ou de la revendication 2, dans lequel l'indice d'isocyanate va de 90 à 100.

4. Le procédé de n'importe quelle revendication précédente, dans lequel le diol homopolymère poly(oxyde de propylène) représente de 20 à 40 % du poids combiné du constituant polyol et du polyol entièrement à base d'oxyde de propylène.

5. Un élastomère polyuréthane fabriqué selon le procédé de n'importe lesquelles des revendications 1 à 4.

6. L'élastomère polyuréthane de la revendication 5, qui présente une augmentation en volume qui n'est pas supérieure à 10 % lorsqu'immergé dans de l'isooctane conformément à la méthode de l'ISO 20344-ISO 20345 décrite en section 8.2 de l'ISO 1817 (1999).

7. L'élastomère polyuréthane de la revendication 5 ou de la revendication 6, qui a une masse volumique allant de 500 à 1200 g/cm³.

8. L'élastomère polyuréthane de la revendication 5, de la revendication 6 ou de la revendication 7, qui a une dureté Shore A allant de 30 à 65.

9. L'élastomère polyuréthane de n'importe lesquelles des revendications 5 à 8, qui est une semelle de chaussure.

10. Chaussure comprenant une tige et une semelle de chaussure de la revendication 9.
